# EUROPEAN PATENT APPLICATION

(11) **EP 1 367 263 A2**
(43) Date of publication of application: **03.12.2003**
(21) Application number: 03010326.1
(22) Date of filing: 08.05.2003
(51) Int. Cl.: F15B 15/28

(54) **Support for fitting sensors on pneumatic or hydraulic cylinders**

(30) Priority: 08.05.2002 IT MI20020246 U
(71) Applicant: OMAL S.r.l., 20021 Bollate (MI) (IT)
(72) Inventor: Lombardi, Maurizio, 20026 Novate (MI) (IT)
(74) Representative: Savi, Alberto

(57) **Abstract**

This invention relates to a device for fitting a magnetic sensor for pneumatic or hydraulic cylinders, with the sensor being used to pilot the solenoid valves that actuate these cylinders.

This device, which is inserted into a slot (2) with an inverted T-shaped section, includes a casing (5) used to house the sensor, and is characterised by the fact that this casing has cross-section dimensions that allow it to pass through the narrow part of the slot and that it is provided with means for fixing the device inside the slot through the deformation of one end of the device, so that the deformed part becomes wider than the narrow part of the slot. The means used to fix the device inside the slot (2) include a cut (7) in the casing (5) so as to form a pair of teeth (6) that are opened wide when a body is forced into the cut, and the casing (5) becomes wider than the narrow part of the slot (2).

## Description

This invention relates to a device for fitting a magnetic sensor for hydraulic or pneumatic cylinders, the sensor being used to pilot solenoid valves to actuate these cylinders. According to the known technique, the outer side of these cylinders is provided with longitudinal slots with inverted T-shaped section. These sensors, contained in a plastic casing having the same shape as the slot, are positioned inside the slots by inserting them from one end of the slot. This can make their insertion especially inconvenient, since if the heads of the cylinders are closed off by plates that do not have slots corresponding to those in the cylinders, the sensor can only be fitted by removing the heads themselves, which obviously increases the costs and the difficulty of this operation. While this fact does not represent a particularly serious problem at the time of manufacturing the cylinder, it becomes much more important in terms of maintenance when an operation that could be completed in a couple of seconds would, in such a case, require work times that may even be very lengthy, especially where disassembly of the head requires disassembling the cylinder from the machine.

This invention overcomes the problem described above by means of an assembly device in accordance with claim 1, that makes it possible to insert magnetic sensors in slots with inverted T-shaped sections, with a movement perpendicular to the longitudinal axis of the slot itself, the device having cross-section dimensions that enable this type of insertion and the slot being provided with means for locking the sensor inside the slot.

This invention will now be explained by way of example that is in no way limiting, in relation to a preferred construction method and with reference to the enclosed figures, where:
- figure 1 shows a cylinder on which said sensor is to be inserted;
- figure 2 shows the device according to the invention.
- figure 3 (a, b) illustrates the mechanism for fixing the device in a slot;
- figure 4 shows a detail of the first fixing system;
- figure 5 shows a detail of the second fixing system.

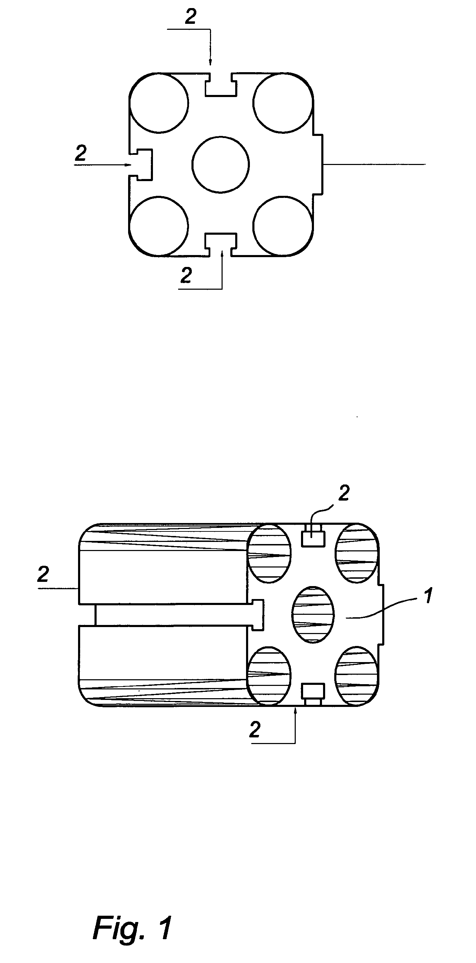

Figure 1 shows both a perspective view and a section view of the external casing (1) for a pneumatic or hydraulic cylinder. This external casing (1) has one or more slots with inverted T-shaped section (2), in a direction parallel to the longitudinal axis of the external casing (1).

It is clear that if we wished to insert a device such a magnetic sensor with the same T-shaped cross-section as the slot (2) in any of these slots (1), this device would have to be inserted from the end of the slots (2). However, when these cylinders (1) are assembled to operate, their ends are closed off with plates (not shown in the figure) with the result that, in order to insert this device, it is necessary to remove these end plates.

If the device has to be inserted with a movement perpendicular to the axis of the cylinder, in order to avoid this inconvenience, the device should be of a size that allows it to pass through the narrow part of the slot, and the device should be fitted with some means for locking it inside the slot itself as, due to its size, it would tend to fall out on its own.

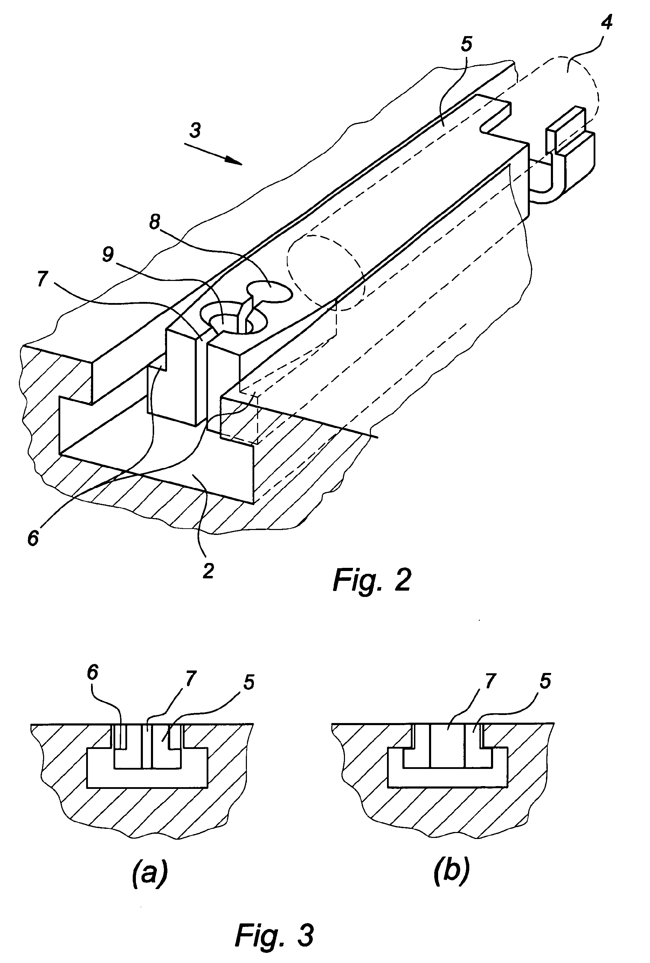

Figure 2 illustrates a device (3) according to the invention, inserted in a slot (2), this device includes a casing (5) that houses a known type of magnetic sensor (4) inside it, and is provided with the means for locking it inside a slot (2).

The device (3) according to this invention, includes a casing (5), preferably made of plastic, and the casing can be inserted into a slot (2) through a movement perpendicular to its axis, having cross-section dimensions that are equal to or smaller than the width of the narrow part of the slot (2).

One end of the casing (5) is provided with a pair of teeth (6) and features a cut (7) so that, if a body used to widen this cut (7) is forced into the cut, the teeth are opened wide and engage in the wider part of the slot (2) into which the casing (5) is inserted, thereby locking one end of the casing (5) in the slot (2). This situation is shown in figures 3 (a, b), where the casing (5) is shown with the cut (7) non deformed (fig. 3a) and opened wide (fig. 3b).

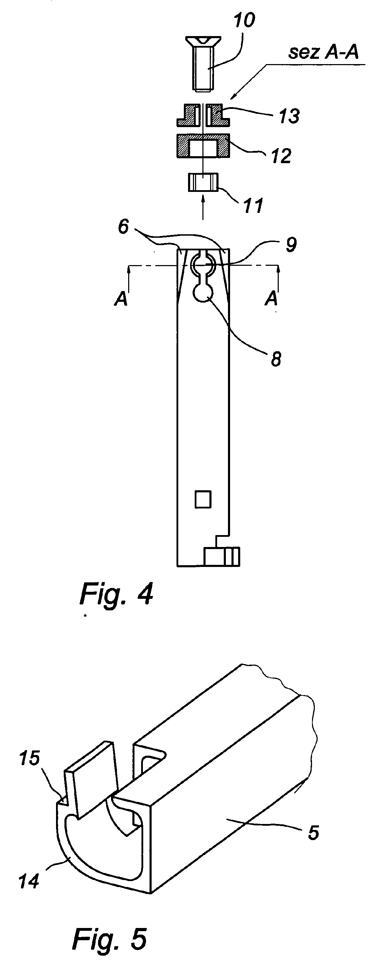

The cut (7) could preferably be accomplished as shown in figure 2, that is, provided with two circular holes (8) and (9). One hole (8) acts to avoid the tension being concentrated at the bottom of the cut, while the other hole (9) is used to house a screw (10) (fig. 4) that causes the teeth (6) to open wide as it enters the hole (9), and the consequent locking of the one end of the casing (5) in the slot (2).

The teeth could be opened wide, for example, by using a screw with a countersunk head that, when forced into the hole (9), which should also preferably be countersunk, causes the teeth (6) to open wide.

Alternatively the hole (9) could be conical so that forced insertion of the screw (10) would cause a wider opening of the teeth (6) according to the depth to which the screw (10) is inserted into the hole (9).

This screw (10) will preferably be of such a length that when it enters the hole (9) it causes the locking of the casing (5) through the teeth (6) that engage in the wider part of the slot (2) as they open wide, and that, when the tip of the screw (10) reaches the bottom of the slot (2), it exerts a force against it improving the locking of the device by forcing the teeth (8) against the narrow part of the slot (2).

This screw (10) could be a self-tapping screw and may engage directly in the plastic of which the casing (5) is made. However, for a more reliable performance the use of a metal nut (11) is recommended, which would be inserted in a metal seat (12), while some advantage could be obtained by protecting the inner part of the hole (9) with a pair of cleats.

In order to prevent the other end of the casing (5) from lifting up it is suitably thickened to make it wider than the narrow part of the slot (2), so that the casing (5) can be inserted into the slot by simply exerting a pressure on it and causing elastic deformation.

One preferred way of achieving this thickening is shown in figure 5 that illustrates a tooth (14) at the end of a stem (15), this tooth (14) and stem (15) should preferably be manufactured while moulding the casing (5).

During assembly, the tooth (14) that sticks out from the external profile of the casing (5) moves backwards, due to elastic deformation of the stem (15), caused by the reaction of the edge of the slot (2). Once this tooth has passed beyond the narrow part of the slot (2), the stem (15) returns to its original shape thereby locking the second end of the casing (5) due to the tooth (14) engaging in the inner part of the narrow section of the slot (2).

The device according to this invention therefore provides the undeniable advantage of allowing a quick fitting of magnetic sensors inside the slots with inverted T-shaped sections of pneumatic or hydraulic cylinders, without the need to remove the heads from these cylinders, resulting in significant advantages, especially when carrying out maintenance activities.

## Claims

1. Device for inserting and locking sensors in a slot with inverted T-shaped section, including a casing used to contain the sensor, **characterised by** the fact that this casing has cross-section dimensions that make it possible for it to pass through the narrow part of the slot and fitted with means for locking this device inside the slot, through the deformation of one end of the device so that the deformed part becomes wider than the narrow part of the slot, and this means for locking the device inside the slot (2) include a cut (7) on at least one part of the casing (5) to form a pair of teeth (6) that, when a body is forced in the cut, causes them to open wide, with the casing (5) becoming wider than the narrow part of the slot (2).

2. Device as per claim 1, **characterised by** the fact that the cut (7) includes a hole (9) into which a screw (10) can be inserted that pushes against the inner walls of the hole (9), causing a thrust that opens the teeth wide (6).

3. Device as per claim 2, **characterised by** the fact that the screw (10) is of such a length that, when it is inserted to open the teeth wide (6) it pushes against the bottom of the slot (2) so as to push the teeth (6) against the inner part of the narrow section of the slot (2).

4. Device as per claim 2, **characterised by** the fact that the screw (10) has a countersunk head so that, as it penetrates the hole (9) it causes the teeth (6) to open wide.

5. Device as per claim 2, **characterised by** the fact that the screw (10) is used along with a nut (11).

6. Device as per claim 1, **characterised by** the fact that the casing (5) is provided with elastic parts that make the casing (5) wider than the narrow part of the slot (2), so that the casing can be inserted into the slot by exerting a pressure on it that causes elastic deformation of the same.

7. Device as per claim 7, **characterised by** the fact that this elastic parts include a tooth (14) at the end of a stem (15), and the stem is used to bend elastically to allow the tooth to move backwards while the casing (5) is inserted into the slot (2) and to recover its original shape once the tooth has passed through the narrow part of the slot.
